# EUROPÄISCHE PATENTANMELDUNG

(11) **EP 2 093 089 A1**
(43) Veröffentlichungstag der Anmeldung: **26.08.2009**
(21) Anmeldenummer: 08101881.4
(22) Anmeldetag: 22.02.2008
(51) Int. Cl.: B60K 15/035, B60K 15/04

(54) **Tankmodul mit Entlüftungsfunktion**

(71) Anmelder: Hella KGaA Hueck & Co., 59552 Lippstadt (DE)
(72) Erfinder: Müller, Hagen, 33181 Wünnenberg (DE); Rafalowicz, Marc, 81679 München (DE)

(57) **Zusammenfassung**

Die vorliegende Erfindung bezieht sich auf ein Tankmodul (1), welches zum Einbau in eine Tankmulde (2) einer Tankanlage eines Kraftfahrzeugs mit einer in der Tankmulde (2) angeordneten Tankklappe (4) geeignet ist, wobei in das Tankmodul (1) mindestens ein Aktuator (6) für die Tankklappe (4), der mit der Tankklappe (4) koppelbar ist, ein Tankentlüftungsventil (7) und zumindest ein optisches Anzeigemittel, das zur optischen Anzeige des Druckstatus innerhalb der Tankanlage geeignet ist, integriert sind.

## Beschreibung

Die vorliegende Erfindung bezieht sich auf ein Tankmodul, welches zum Einbau in eine Tankmulde einer Tankanlage eines Kraftfahrzeugs mit einer in der Tankmulde angeordneten Tankklappe geeignet ist.

Bei Kraftfahrzeugen mit einem Kraftstofftank stellt sich bei höheren Temperaturen (zum Beispiel im Sommer) häufig das Problem, dass der Druck innerhalb des Kraftstofftanks ansteigt. Bei Hybridfahrzeugen mit einem Elektromotor und einem Verbrennungsmotor, bei denen ein Benzindrucktank vorgesehen ist, kann der Druck innerhalb des Benzindrucktanks während des Betriebs des Elektromotors ebenfalls ansteigen. Der sich innerhalb eines Kraftstofftanks bildende Überdruck kann zum Beispiel dazu führen, dass es zu einem plötzlichen und unkontrollierten Öffnen der Tankklappe kommt. Darüber hinaus können Kraftstoffdämpfe in die Atmosphäre entweichen und Kraftstoff kann aus dem Kraftstofftank austreten. Um dieses Problem bei einem Kraftfahrzeug mit Hybridantrieb zu umgehen, wird dessen Verbrennungsmotor in regelmäßigen Abständen aktiviert, was zu einem erhöhten Schadstoffausstoß führt und so die Umweltbilanz des Hybridfahrzeugs verschlechtert. Aus dem Stand der Technik ist es ferner bekannt, eine Entlüftung eines Kraftstofftanks mittels eines relaisgesteuerten Tankentlüftungsventils vorzunehmen. Eine Steuerung der Tankklappe kann insbesondere mit Hilfe eines Aktuators erfolgen, der mit der Tankklappe gekoppelt ist. Die Montage des Tankentlüftungsventils und des Aktuators, die als separate Bauteile vorliegen, ist relativ zeitaufwändig und kompliziert.

Hier setzt die vorliegende Erfindung an.

Der vorliegenden Erfindung liegt die Aufgabe zugrunde, ein Tankmodul der eingangs genannten Art zur Verfügung zu stellen, das auf einfache Weise in der Tankmulde einer Tankanlage eines Kraftfahrzeugs montiert werden kann und das eine Überwachung des Druckstatus sowie einen kontrollierten Druckabbau innerhalb des Kraftstofftanks ermöglicht.

Diese Aufgabe wird durch ein Tankmodul der eingangs genannten Art mit den Merkmalen des kennzeichnenden Teils des Patentanspruchs 1 gelöst. Die Unteransprüche betreffen vorteilhafte Weiterbildungen der Erfindung.

Gemäß Anspruch 1 zeichnet sich ein erfindungsgemäßes Tankmodul dadurch aus, dass in das Tankmodul mindestens ein Aktuator für die Tankklappe, der mit der Tankklappe koppelbar ist, ein Tankentlüftungsventil und zumindest ein optisches Anzeigemittel, das zur optischen Anzeige des Druckstatus innerhalb der Tankanlage geeignet ist, integriert sind. Mit anderen Worten vereinigt das erfindungsgemäße Tankmodul also einen Aktuator (Steller zur Tankverriegelung) für die Tankklappe, ein Tankentlüftungsventil zum kontrollierten Abbau des Drucks innerhalb des Kraftstofftanks sowie zumindest ein optisches Anzeigemittel, welches zur optischen Anzeige des Druckstatus innerhalb der Tankanlage geeignet ist, in einem kompakten und auf einfache Weise in der Tankmulde montierbaren Modul. Mit Hilfe des Tankentlüftungsventils, welches gemäß einer vorteilhaften Ausführungsform als Proportionalventil ausgeführt sein kann, wird der Druckabbau (die Entlüftung der Tankanlage) gesteuert. Die Entlüftung erfolgt vorzugsweise durch eine kontrollierte Durchströmung einer mit einem Aktivkohlefilter versehenen Entlüftungsleitung der Tankanlage. Vorzugsweise ist der Aktivkohlefilter dabei strömungstechnisch nicht direkt mit dem Tank, sondern mit der Tankmulde verbunden. Mit Hilfe des erfindungsgemäßen Tankmoduls können die Überwachung sowie der kontrollierte Druckabbau im Tank auf einfache Weise umgesetzt werden. Die Überwachung des Tankinnendrucks sowie der kontrollierte Druckabbau innerhalb des Kraftstofftanks haben allerdings eine gewisse Wartezeit zur Folge, die beim Fahrer des Kraftfahrzeugs unter Umständen den Eindruck hervorrufen kann, dass die Steuerung der Tankklappe defekt sei. Aus diesem Grund schlägt die erfindungsgemäße Lösung vor, dass zumindest ein optisches Anzeigemittel in das Tankmodul integriert ist, um dem Fahrer eine optische Rückmeldung zu geben, wenn beispielsweise der Druckabbau innerhalb der Tankanlage gerade im Gange ist. Eine Wartezeit nach der Aufforderung "Öffnung der Tankklappe" seitens des Fahrers wird also bewusst in Kauf genommen. Die erfindungsgemäße Lösung stellt erstmals eine optische Rückmeldung für die Wartezeit während des Druckabbaus in einer Tankanlage eines Kraftfahrzeugs zur Verfügung. Das optische Anzeigemittel kann auch zur optischen Anzeige weiterer Systemparameter und des Systemstatus der Tankanlage geeignet und eingerichtet sein. Ein weiterer vorteilhafter Aspekt der hier vorgestellten Lösung besteht darin, dass die Tankmulde als Bauraum für das hier vorgestellte Tankmodul effektiv genutzt werden kann.

In einer besonders bevorzugten Ausführungsform wird vorgeschlagen, dass das Tankmodul eine Drucksensoreinrichtung aufweist, die zur Erfassung des Kraftstoffdrucks innerhalb der Tankanlage geeignet ist. Alternativ besteht auch die Möglichkeit, dass das Tankmodul an eine bereits in der Tankanlage des Kraftfahrzeugs vorhandene Drucksensoreinrichtung anschließbar ist.

In einer vorteilhaften Ausführungsform kann vorgesehen sein, dass das optische Anzeigemittel zumindest ein Leuchtmittel umfasst. Vorzugsweise können mindestens zwei Leuchtmittel vorgesehen sein, die im Tankmodul voneinander beabstandet angeordnet sein können und gleichzeitig oder gemäß einer besonders vorteilhaft Variante unabhängig voneinander betreibbar sind. Das beziehungsweise die Leuchtmittel können derart angesteuert werden, dass sie ereignis- und situationsabhängig kontinuierlich leuchten oder aber mit einer voreingestellten oder voreinstellbaren Frequenz blinken, um dem Fahrer des Fahrzeugs unterschiedliche Zustände (insbesondere Druckzustände) der Tankanlage optisch anzuzeigen.

Um den optisch wirksamen und damit für einen Benutzer während des Betriebs des Tankmoduls effektiv sichtbaren Bereich des mindestens einen optischen Anzeigemittels zu vergrößern, sieht eine besonders vorteilhafte Ausführungsform vor, dass das optische Anzeigemittel zumindest ein Leuchtsegment umfasst, das von dem mindestens einen Leuchtmittel beleuchtbar ist. Das von dem Leuchtmittel emittierte Licht kann beispielsweise stirnseitig in das diesem zugeordnete Leuchtsegment eingekoppelt werden. Das Leuchtsegment kann zum Beispiel zumindest teilweise aus Polycarbonat bestehen.

Das Leuchtmittel beziehungsweise die Leuchtmittel kann/können einfarbig oder alternativ auch mehrfarbig (zum Beispiel als RGB-Leuchtdiode) ausgeführt sein. Wenn mehrere Leuchtmittel, die vorzugsweise unabhängig voneinander ansteuerbar sind, vorgesehen sind, können diese auch Licht in unterschiedlichen Spektralbereichen emittieren. Es ist besonders vorteilhaft, wenn das mindestens eine Leuchtmittel eine Leuchtdiode ist. Leuchtdioden zeichnen sich insbesondere durch ihre Langlebigkeit sowie durch einen vergleichsweise geringen Stromverbrauch aus.

In einer besonders bevorzugten Weiterbildung wird vorgeschlagen, dass das Tankmodul von einer externen Steuerungseinrichtung ansteuerbar ist. Ein Vorteil dieser Ausführungsform besteht insbesondere darin, dass die Steuerung des Tankmoduls, insbesondere die Steuerung des Aktuators zur Betätigung der Tankklappe, die Steuerung der Tankentlüftungsfunktion sowie des mindestens einen optischen Anzeigemittels nicht in das Tankmodul integriert ist, so dass das Tankmodul flexibel bei unterschiedlichen Tankanlagen und Fahrzeugtypen verwendet werden kann. Die externe Steuerungseinrichtung, mittels derer das Tankmodul ansteuerbar ist, kann zum Beispiel eine Tanksteuerungseinrichtung oder eine Motorsteuerungseinrichtung sein. Da das Tankmodul für unterschiedliche Tankanlagen beziehungsweise Fahrzeugtypen geeignet ist, kann die Variantenvielfalt bei Fahrzeugherstellern, bei denen das Tankmodul verbaut wird, in vorteilhafter Weise verringert werden.

In einer besonders vorteilhaften Ausführungsform besteht darüber hinaus die Möglichkeit, dass das Tankmodul eine Fehlbetankungsschutzeinrichtung umfasst, die in einen Einfüllstutzen der Tankanlage einsetzbar ist. Mit Hilfe der Fehlbetankungsschutzeinrichtung kann eine Betankung des Fahrzeugs mit einem für dessen Verbrennungsmotor ungeeigneten Kraftstoff (zum Beispiel Dieselkraftstoff an Stelle von Ottokraftstoff oder Ottokraftstoff an Stelle von Dieselkraftstoff) wirksam verhindert werden. Vorzugsweise ist die Fehlbetankungsschutzeinrichtung mit mindestens einem der optischen Anzeigemittel gekoppelt, so dass der Fahrer im Falle einer Fehlbetankung optisch gewarnt werden kann. Beispielsweise kann die Fehlbetankungsschutzeinrichtung mit einem der Leuchtmittel des optischen Anzeigemittels gekoppelt sein, welches Licht im roten Spektralbereich emittieren kann und im Falle einer Fehlbetankung des Kraftfahrzeugs Licht in diesem Spektralbereich kontinuierlich oder mit einer bestimmten Frequenz emittieren kann. Dadurch kann dem Fahrer eine Betankung des Kraftfahrzeugs mit einem ungeeigneten Kraftstoff auf optischem Wege wirksam angezeigt werden.

In einer weiteren vorteilhaften Weiterbildung kann darüber hinaus vorgesehen sein, dass das Tankmodul Mittel zur Bestimmung der Kraftstoffqualität aufweist. Das Ergebnis der Kraftstoffqualitätsprüfung kann zum Beispiel der Motorsteuerungseinrichtung zur Verfügung gestellt werden.

In einer weiteren vorteilhaften Ausführungsform kann auch vorgesehen sein, dass das Tankentlüftungsventil zur Steuerung des Endes des Betankungsvorgangs bei einer Fehlbetankung oder beim Erreichen eines maximalen Kraftstofffüllstands geeignet und eingerichtet ist.

Anhand der beigefügten Zeichnungen wird die Erfindung nachfolgend näher erläutert. Dabei zeigt:
- Fig. 1: eine schematische Darstellung eines Tankmoduls gemäß einem bevorzugten Ausführungsbeispiel der vorliegenden Erfindung;
- Fig. 2: eine schematische Darstellung eines Tankentlüftungsventils des Tankmoduls gemäß Fig. 1;
- Fig. 3: ein Flussdiagramm, welches die Funktion des Tankmoduls sowie den Ablauf des Tankprozesses veranschaulicht.

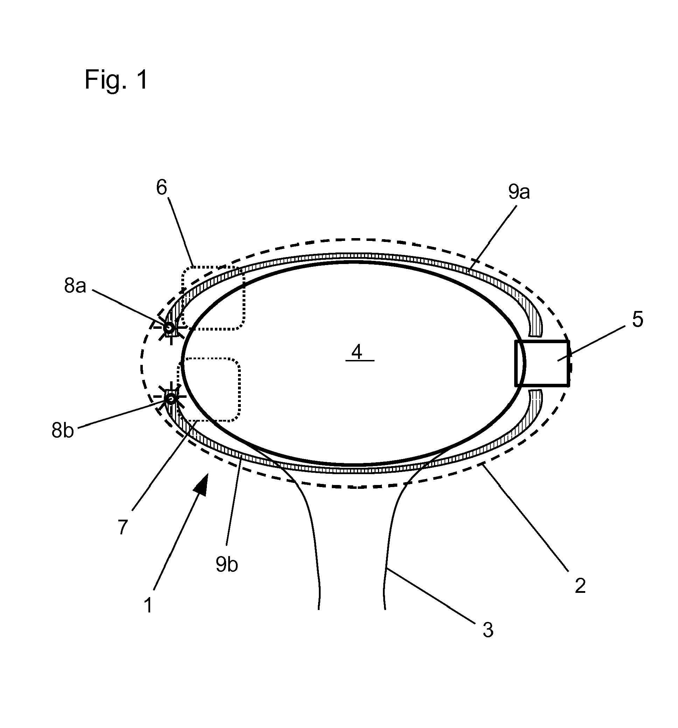

Zunächst wird auf Fig. 1 Bezug genommen, in der ein Tankmodul 1 für eine Tankanlage eines Kraftfahrzeugs gemäß einem bevorzugten Ausführungsbeispiel der vorliegenden Erfindung schematisch stark vereinfacht dargestellt ist. Das Tankmodul 1 ist in einer Tankmulde 2 eines Kraftfahrzeugs montierbar, in der ein Einfüllstutzen 3 angeordnet ist, welcher mit einem hier nicht explizit dargestellten Kraftstofftank des Kraftfahrzeugs in Strömungsverbindung steht. Während des Betankens des Kraftfahrzeugs kann der Treibstoff durch den Einfüllstutzen 3 in den Kraftstofftank einströmen. Damit die Tankmulde 2 nach dem Betanken wieder verschlossen werden kann, ist eine Tankklappe 4 vorgesehen, welche über ein Scharnier 5 schwenkbar im Bereich der Tankmulde 2 angelenkt ist.

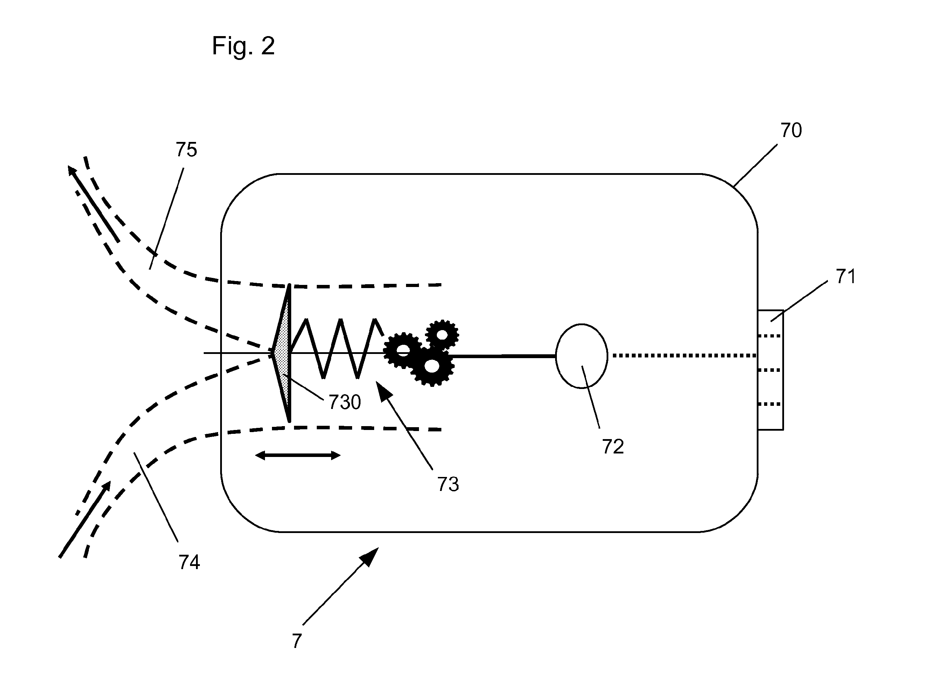

Das Tankmodul 1 umfasst darüber hinaus einen Aktuator 6, der mit der Tankklappe 4 gekoppelt ist und mittels dessen die Tankklappe 4 von einer Verschlussstellung, in der sie die Tankmulde 2 verschließt, in eine Öffnungsstellung, in der die Tankmulde 2 geöffnet ist, beziehungsweise von der Öffnungsstellung wieder zurück in die Verschlussstellung überführt werden kann. In das Tankmodul 1 ist darüber hinaus ein Tankentlüftungsventil 7 integriert, das in diesem Ausführungsbeispiel als Proportionalventil ausgeführt ist und dessen Funktion weiter unten unter Bezugnahme auf Fig. 2 näher erläutert wird.

Das Tankmodul 1 ist zum Beispiel für den Einsatz in einer Tankanlage eines Kraftfahrzeugs mit einem Drucktank geeignet. Bei einem Kraftfahrzeug mit einem Drucktank muss vor dem Betanken der Druck innerhalb des Drucktanks mittels einer hier nicht explizit dargestellten Drucksensoreinrichtung überwacht und gegebenenfalls kontrolliert abgebaut werden. Die Drucksensoreinrichtung kann dabei Teil des Tankmoduls 1 sein. Alternativ besteht jedoch auch die Möglichkeit, dass das Tankmodul 1 an eine bereits vorhandene Drucksensoreinrichtung der Tankanlage anschließbar ist. Mit dem kontrollierten Druckabbau innerhalb des Tanks ist eine gewisse, für den Fahrer des Kraftfahrzeugs wahrnehmbare Wartezeit verbunden, bevor schließlich die Tankklappe 4 mittels des daran gekoppelten Aktuators 6 geöffnet werden kann. Gemäß der hier vorgeschlagenen Lösung sind mehrere optische Anzeigemittel in das Tankmodul 1 integriert, um den jeweiligen Druckstatus und gegebenenfalls auch weitere Systemzustände der Tankanlage dem Fahrer optisch anzuzeigen. In diesem Ausführungsbeispiel weist das Tankmodul 1 zu diesem Zweck ein erstes Leuchtmittel 8a sowie ein zweites Leuchtmittel 8b auf, welches vom ersten Leuchtmittel 8a beabstandet angeordnet ist.

In Fig. 1 ist zu erkennen, dass die beiden Leuchtmittel 8a, 8b an einer dem Scharnier 5 gegenüberliegenden Seite des Tankmoduls 1 angeordnet sind. Mit Hilfe der beiden Leuchtmittel 8a, 8b, die von einer hier ebenfalls nicht explizit dargestellten Steuereinheit für das Tankmodul 1 ansteuerbar sind, kann insbesondere der jeweilige Druckstatus des Drucktanks optisch angezeigt werden. Die beiden Leuchtmittel 8a, 8b umfassen in diesem Ausführungsbeispiel jeweils zumindest eine Leuchtdiode, die einfarbig oder mehrfarbig (als RGB-Leuchtdiode) ausgeführt sein kann. Die beiden Leuchtmittel 8a, 8b können jeweils unterschiedliche Farben haben und somit auch Licht in unterschiedlichen Spektralbereichen emittieren.

Um den optisch wirksamen und damit für den Fahrer sichtbaren Leuchtbereich des optischen Anzeigemittels zu vergrößern, ist jedem der Leuchtmittel 8a, 8b jeweils ein Leuchtsegment 9a, 9b zugeordnet. Die beiden Leuchtsegmente 9a, 9b sind in diesem Ausführungsbeispiel im Wesentlichen bogenförmig ausgebildet und erstrecken sich jeweils von den Leuchtmitteln 8a, 8b zum Scharnier 5 hin. Vorzugsweise bestehen die beiden Leuchtsegmente 9a, 9b aus Polycarbonat. Das Licht, das vorzugsweise situationsabhängig steuerbar von den Leuchtmitteln 8a, 8b emittiert wird, tritt jeweils an einer stirnseitigen Lichteintrittsfläche in die ihnen zugeordneten Leuchtsegmente 9a, 9b ein und breitet sich innerhalb der Leuchtsegmente 9a, 9b aus. Dadurch kann der Status des Tankmoduls 1, insbesondere während des Druckabbaus vor dem Betanken, dem Benutzer optisch angezeigt werden. Zum Beispiel kann während des Druckabbaus im Tank zumindest eines der Leuchtmittel 8a, 8b Licht im roten Spektralbereich emittieren, damit dem Fahrer signalisiert wird, dass ein Öffnen der Tankklappe 4 derzeit nicht möglich ist. Nach Beendigung des Druckabbaus im Tank kann beispielsweise zumindest eines der Leuchtmittel 8a, 8b Licht im grünen Spektralbereich emittieren, um dem Fahrer zu signalisieren, dass ein Öffnen der Tankklappe 4 möglich ist.

In einer weiteren, hier nicht explizit dargestellten Ausführungsform kann an das Tankmodul 1 auch eine Fehlbetankungsschutzeinrichtung angeschlossen sein, die insbesondere im Bereich des Einfüllstutzens 3 der Tankanlage angeordnet sein kann. Mit Hilfe der Fehlbetankungsschutzeinrichtung können unterschiedliche Kraftstoffsorten beim Betanken zuverlässig erkannt werden, um eine Fehlbetankung mit einem für den Verbrennungsmotor des Kraftfahrzeugs ungeeigneten Kraftstoff wirksam zu verhindern. Eine Fehlbetankung kann einem Benutzer vorzugsweise optisch mit Hilfe zumindest eines der Leuchtmittel 8a, 8b angezeigt werden.

Unter Bezugnahme auf Fig. 2 ist dort das Tankentlüftungsventil 7 des Tankmoduls 1 gemäß Fig. 1 schematisch stark vereinfacht dargestellt. Das Tankentlüftungsventil 7 ist in diesem Ausführungsbeispiel als Proportionalventil ausgeführt und umfasst ein Gehäuse 70, innerhalb dessen ein Motor 72 sowie eine mit dem Motor 72 mechanisch gekoppelte Stellvorrichtung 73 mit einem Verschlussorgan 730 untergebracht sind. Aus dem Gehäuse 70 ist ein Stecker 71 herausgeführt, so dass das Tankentlüftungsventil 7 an eine externe Steuerungseinrichtung des Tankmoduls 1 angeschlossen werden kann. Ferner sind zwei Fluidströmungsleitungen 74, 75 zu erkennen, durch die während des Druckabbaus im Tank gasförmige Medien strömen können. Eine erste Fluidströmungsleitung 74 führt dabei zum Tank. Eine zweite Fluidströmungsleitung 75 ist eine Entlüftungsleitung und führt zu einem Aktivkohlefilter. Die Strömungsrichtung der gasförmigen Medien ist in Fig. 2 durch Pfeile veranschaulicht. Der Druckabbau innerhalb des Tanks kann über das Tankentlüftungsventil 7 auf kontrollierte Weise erfolgen. Mittels des Verschlussorgans 730 der mechanischen Stellvorrichtung 73 kann die Durchströmung des Tankentlüftungsventils 7 gesteuert verändert werden.

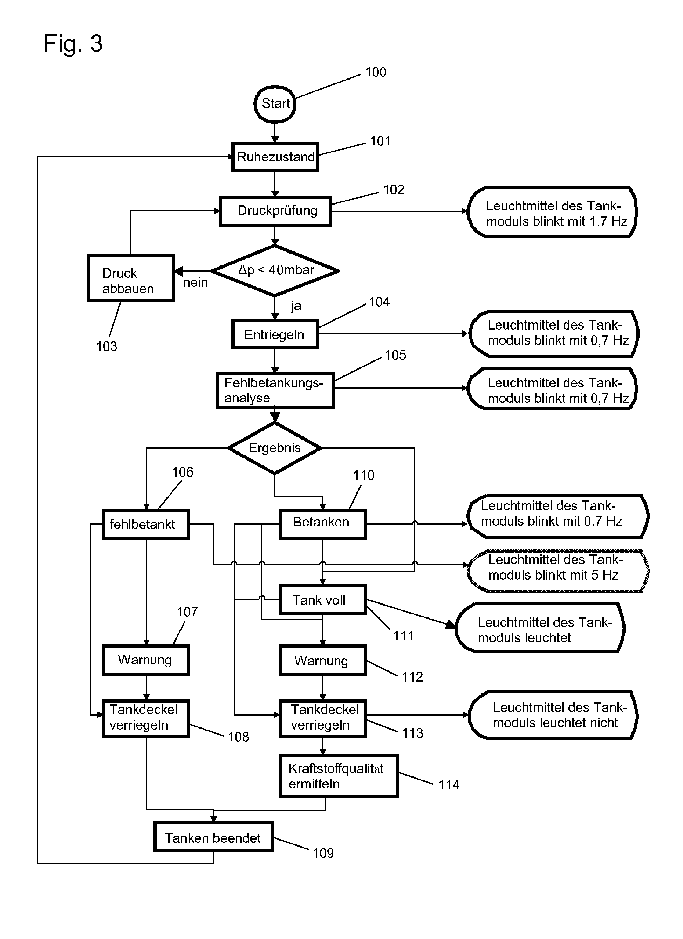

In Fig. 3 ist ein Flussdiagramm dargestellt, welches die Funktion des Tankmoduls 1 beim Betanken eines Fahrzeugs sowie den allgemeinen Ablauf des Tankprozesses veranschaulicht. Nach dem Start 100 befindet sich Tankmodul 1 zunächst in einem Ruhezustand 101. Im Ruhezustand 101 überwacht das Tankmodul 1 kontinuierlich, ob der Wunsch besteht, einen Tankvorgang einzuleiten. Ein Tankwunsch kann beispielsweise dadurch eingeleitet werden, dass der Fahrer des Fahrzeugs einen entsprechenden Taster im Fahrzeug oder den Tankdeckel 4 betätigt. In jedem Fall muss sichergestellt sein, dass die Zündung des Kraftfahrzeugs ausgeschaltet ist. Wenn das Tankmodul 1 einen Tankwunsch erkennt, wird im Verfahrensschritt 102 eine Druckprüfung eingeleitet. Bei der Druckprüfung wird geprüft, ob der Differenzdruck zwischen dem Druck innerhalb des Kraftstofftanks und dem Atmosphärendruck kleiner als ein bestimmter voreingestellter Grenzwert (zum Beispiel kleiner als 40 mbar) ist. Während der Druckprüfung blinkt zumindest eines der Leuchtmittel 8a, 8b des Tankmoduls 1 mit einer bestimmten Wiederholfrequenz, beispielsweise mit einer Wiederholfrequenz von 1,7 Hz. Dadurch wird dem Fahrer auf optischem Wege signalisiert, dass derzeit eine Druckprüfung innerhalb der Tankanlage im Gange ist.

Ergibt die Druckprüfung, dass der Differenzdruck größer als der voreingestellte Grenzwert ist, wird beim Verfahrensschritt 103 ein Druckabbau in der Tankanlage eingeleitet. Wenn der Differenzdruck demgegenüber kleiner als der voreingestellte Grenzwert ist, wird beim Verfahrensschritt 104 der Tankdeckel 4 entriegelt. Zumindest eines der Leuchtmittel 8a, 8b blinkt während der Entriegelung des Tankdeckels 4 mit einer Wiederholfrequenz, die vorzugsweise von der Frequenz, mit der zumindest eines der Leuchtmittel 8a, 8b während der Druckprüfung leuchtet, verschieden ist. Die Wiederholfrequenz während der Entriegelung des Tankdeckels 4 beträgt in diesem Ausführungsbeispiel 0,7 Hz. Beim nachfolgenden Verfahrensschritt 105 wird mittels der Fehlbetankungsschutzeinrichtung eine Fehlbetankungsanalyse eingeleitet, um zu überprüfen, ob der zugetankte Kraftstoff für den Verbrennungsmotor des Kraftfahrzeugs geeignet ist. Zumindest eines der Leuchtmittel 8a, 8b blinkt während der Fehlbetankungsanalyse mit einer Wiederholfrequenz, die vorzugsweise von der Frequenz, mit der zumindest eines der Leuchtmittel 8a, 8b während der Druckprüfung leuchtet, verschieden ist. Die Frequenz beträgt in diesem Ausführungsbeispiel 0,7 Hz.

Ergibt die Fehlbetankungsanalyse, dass der Kraftstoff für das Fahrzeug ungeeignet ist, wird beim Verfahrensschritt 106 der Status "fehlbetankt" gesetzt. Zumindest eines der Leuchtmittel 8a, 8b blinkt dann mit einer Frequenz, die vorzugsweise von der Frequenz während der Fehlbetankungsanalyse verschieden ist. Die Frequenz beträgt in diesem Ausführungsbeispiel 5 Hz und signalisiert dem Fahrer, dass ein für das Fahrzeug ungeeigneter Kraftstoff zugetankt wurde. Vorzugsweise ist die Fehlbetankungsschutzeinrichtung mit dem Tankentlüftungsventil 7 gekoppelt, welches sich bei der Erkennung einer Fehlbetankung selbsttätig schließt, um auf diese Weise zu verhindern, dass weitere Mengen des für das Kraftfahrzeug ungeeigneten Kraftstoffs in den Kraftstofftank gelangen. Wird die Zündung des Kraftfahrzeugs bei geöffnetem Tankdeckel 4 eingeschaltet, wird eine Warnung generiert (Verfahrensschritt 107), dass der Tankdeckel 4 geöffnet ist. Nach dem Verriegeln des Tankdeckels 4 wird der Status "Tankdeckel verriegelt" gesetzt (Schritt 108) und beim Verfahrensschritt 109 der Status "Tanken beendet" gesetzt. Das Tankmodul 1 kehrt dann in seinen Ruhezustand 101 zurück.

Ergibt die Fehlbetankungsanalyse während der Durchführung des Verfahrensschritts 105, dass der Kraftstoff für das Fahrzeug geeignet ist und dass der Füllstand des Kraftstoffs innerhalb des Tanks kleiner als der maximale Füllstand ist, so wird beim Verfahrensschritt 110 das Betanken des Kraftfahrzeugs eingeleitet, bis der maximale Füllstand erreicht wird. Nach dem Erreichen des maximalen Füllstands wird beim Ver fahrensschritt 111 der Status "Tank vollständig mit Kraftstoff gefüllt" gesetzt. Das Tankentlüftungsventil 7 wird geschlossen und der Tankinnendruck steigt an. Die Zapfpistole schaltet sich ab und zumindest eines der Leuchtmittel 8a, 8b leuchtet dann kontinuierlich, um dem Fahrer das Ende des Betankungsvorgangs optisch anzuzeigen.

Ergibt die Fehlbetankungsanalyse bei der Durchführung des Verfahrensschritts 105, dass der Kraftstoff für das Fahrzeug geeignet ist und dass der maximale Füllstand des Kraftstoffs innerhalb des Tanks bereits erreicht ist, so wird der Verfahrensschritt 110 (Betanken des Kraftfahrzeugs) übersprungen und beim Verfahrensschritt 111 der Status "Tank vollständig mit Kraftstoff gefüllt" gesetzt. Zumindest eines der Leuchtmittel 8a, 8b leuchtet dann kontinuierlich auf, um dem Fahrer das Ende des Betankungsvorgangs optisch anzuzeigen. Das Tankventil innerhalb der Tankanlage bleibt geschlossen, um das weitere Zutanken von Kraftstoff zu verhindern.

Wird in den beiden vorstehend beschriebenen Szenarien die Zündung des Fahrzeugs eingeschaltet, bevor der Tankdeckel 4 wieder verriegelt worden ist, wird eine Warnung generiert (Schritt 112), dass der Tankdeckel 4 geöffnet ist. Durch Drücken des Tankdeckels 4 wird dieser verriegelt (Verfahrensschritt 113). Die Leuchtmittel 8a, 8b des Tankmoduls 1 werden ausgeschaltet. Anschließend wird in diesem Ausführungsbeispiel die Kraftstoffqualität ermittelt (Verfahrensschritt 114). Das Ergebnis der Kraftstoffqualitätsanalyse kann beispielsweise einer Motorsteuereinrichtung zur Verfügung gestellt werden. Das Betanken des Kraftfahrzeugs ist dann beendet (Verfahrensschritt 109) und das System wird wieder in seinen Ruhezustand 101 versetzt.

Bezugszeichenliste
- 1: Tankmodul
- 2: Tankmulde
- 3: Einfüllstutzen
- 4: Tankklappe
- 5: Scharnier
- 6: Aktuator
- 7: Tankentlüftungsventil
- 8a: erstes Leuchtmittel
- 8b: zweites Leuchtmittel
- 9a: erstes Leuchtsegment
- 9b: zweites Leuchtsegment
- 70: Ventilgehäuse
- 71: Stecker
- 72: Motor
- 73: Stellvorrichtung
- 74: erste Fluidströmungsleitung
- 75: zweite Fluidströmungsleitung
- 730: Verschlussorgan

## Patentansprüche

1. Tankmodul (1), geeignet zum Einbau in eine Tankmulde (2) einer Tankanlage eines Kraftfahrzeugs mit einer in der Tankmulde (2) angeordneten Tankklappe (4), **dadurch gekennzeichnet, dass** in das Tankmodul (1) mindestens ein Aktuator (6) für die Tankklappe (4), der mit der Tankklappe (4) koppelbar ist, ein Tankentlüftungsventil (7) und zumindest ein optisches Anzeigemittel, das zur optischen Anzeige des Druckstatus innerhalb der Tankanlage geeignet ist, integriert sind.

2. Tankmodul (1) nach Anspruch 1, **dadurch gekennzeichnet, dass** das Tankmodul (1) eine Drucksensoreinrichtung aufweist, die zur Erfassung des Kraftstoffdrucks innerhalb der Tankanlage geeignet ist.

3. Tankmodul (1) nach Anspruch 1 oder 2, **dadurch gekennzeichnet, dass** das optische Anzeigemittel zumindest ein Leuchtmittel (8a, 8b) umfasst.

4. Tankmodul (1) nach Anspruch 3, **dadurch gekennzeichnet, dass** das optische Anzeigemittel zumindest ein Leuchtsegment (9a, 9b) umfasst, das von dem mindestens einen Leuchtmittel (8a, 8b) beleuchtbar ist.

5. Tankmodul (1) nach Ansprüche 4, **dadurch gekennzeichnet, dass** das mindestens eine Leuchtsegment (9a, 9b) zumindest teilweise aus Polycarbonat besteht.

6. Tankmodul (1) nach einem der Ansprüche 3 bis 5, **dadurch gekennzeichnet, das** mindestens eine Leuchtmittel (8a, 8b) eine Leuchtdiode ist.

7. Tankmodul (1) nach einem der Ansprüche 1 bis 6, **dadurch gekennzeichnet, dass** das Tankmodul (1) von einer externen Steuerungseinrichtung ansteuerbar ist.

8. Tankmodul (1) nach einem der Ansprüche 1 bis 7, **dadurch gekennzeichnet, dass das** Tankmodul (1) eine Fehlbetankungsschutzeinrichtung umfasst, die in einen Einfüllstutzen (3) der Tankanlage einsetzbar ist.

9. Tankmodul (1) nach Anspruch 8, **dadurch gekennzeichnet, dass** die Fehlbetankungsschutzeinrichtung mit dem optischen Anzeigemittel gekoppelt ist.

10. Tankmodul (1) nach einem der Ansprüche 1 bis 9, **dadurch gekennzeichnet, dass** das Tankentlüftungsventil (6) ein Proportionalventil ist.

11. Tankmodul (1) nach einem der Ansprüche 1 bis 10, **dadurch gekennzeichnet, dass** das Tankmodul (1) Mittel zur Bestimmung der Kraftstoffqualität aufweist.

12. Tankmodul (1) nach einem der Ansprüche 1 bis 11, **dadurch gekennzeichnet, dass** das Tankentlüftungsventil (6) für eine Steuerung des Endes des Betankungsvorgangs bei einer Fehlbetankung oder beim Erreichen eines maximalen Kraftstofffüllstands geeignet und eingerichtet ist.
